# EUROPEAN PATENT APPLICATION

(11) **EP 4 761 415 A1**
(43) Date of publication of application: **17.06.2026**
(21) Application number: 24851808.6
(22) Date of filing: 05.08.2024
(51) Int. Cl.: H04W 72/0457, H04W 28/06, H04W 52/54, H04W 74/02, H04W 76/15, H04W 84/12

(54) **ACCESS POINT DEVICE, STATION DEVICE, CONTROL METHOD, AND PROGRAM**

(30) Priority: 10.08.2023 JP 2023131393
(71) Applicant: Canon Kabushiki Kaisha, Tokyo 146-8501 (JP)
(72) Inventor: TAKADA Tomoyuki, Tokyo 146-8501 (JP)
(74) Representative: Canon Europe Limited
(86) International application number: PCT/JP2024/027918
(87) International publication number: WO 2025/033384

(57) **Abstract**

An access point device that performs wireless communication based on the Institute of Electrical and Electronics Engineers (IEEE) 802.11 standards determines whether a frame of a predetermined type has been received from a station device connected to the access point device in a case of operating in an enhanced multi-link single radio (EMLSR) mode. In a case where the access point device determines that the frame of the predetermined type has been received, the access point device releases the EMLSR mode and performs data communication with the station device. Then, after the data communication has been performed, the access point device transitions its operation mode to the EMLSR mode.

## Description

### Technical Field

The present invention relates to an access point device and a station device that communicate data.

### Background Art

In recent years, along with an increase in the amount of data being communicated, the development of communication technologies, such as wireless local area networks (LANs), has been advanced. As a major communication standard for wireless LAN, a series of Institute of Electrical and Electronics Engineers (IEEE) 802.11 standards is known. The series of IEEE 802.11 standards includes standards such as IEEE 802.11a/b/g/n/ac/ax.

Further, the formulation of the IEEE 802.11 be standard, which is a successor standard to the IEEE 802.11ax, is progressing. As a new function in the IEEE 802.11be standard, a function, such as multi-link communication, is being studied in which an access point (AP) and a station (STA) establish a plurality of links having different frequency channels and communicate in parallel. In addition, PTL 1 describes a mechanism for establishing a plurality of links for multi-link operation.

Furthermore. the specifications of the IEEE 802.11bn Ultra High Reliability (UHR) standard, which is a successor standard to the IEEE 802.11be standard, are also being studied.

### Citation List

### Patent Literature

PTL 1: Japanese Patent Laid-Open No. 2021-103805

### Summary of Invention

In multi-link operation, a simultaneous transmit and receive (STR) mode is defined, in which a communication device can transmit and receive frames simultaneously on a plurality of links. In this mode, since the plurality of links is kept on standby for communication, power consumption is large. Accordingly, in the IEEE 802.11be standard, an enhanced multi-link single radio (EMLSR) mode is defined as a method for reducing the power consumption of a communication device. This mode is defined only for a non-access point multi-link device (non-AP MLD) in the IEEE 802.11be standard. In other words, the application of the EMLSR mode to an access point multi-link device (AP MLD) is not defined at the present time.

While operating in this EMLSR mode, the non-AP MLD waits to receive an initial control frame transmitted from the AP MLD simultaneously on a plurality of links (EMLSR links) established with the AP MLD.

In this case, channels that are different from one another are generally selected for the respective EMLSR links. Then, the AP MLD selects one link and transmits an initial control frame via that link. At this time, the AP MLD selects an optimal link (e.g., a link using a channel that is not congested) and transmits the initial control frame. Upon receiving the initial control frame, the non-AP MLD executes data exchange with the AP MLD using the link via which the initial control frame has been received. While operating in the EMLSR mode, the non-AP MLD does not transmit and receive simultaneously via a plurality of links. Accordingly, the non-AP MLD can execute data exchange with the AP MLD triggered by the reception of the initial control frame while saving power consumption.

However, as described above, for the AP MLD, including the EMLSR mode, no method for reducing its power consumption is defined, and in the consideration of the specifications of the IEEE 802.11bn standard, the reduction of power consumption of the AP MLD is raised as one of the discussion topics.

In order to reduce the power consumption of the AP MLD, it is desirable to promptly respond to changes in throughput or transmission delay amount required by the non-AP MLD connected to the AP MLD, while achieving power saving. However, no method for realizing this has been considered at the present time.

### Solution to Problem

An access point device according to one aspect of the present invention includes a determination unit configured to determine whether a frame of a predetermined type has been received from a station device connected to an access point device configured to perform wireless communication based on the Institute of Electrical and Electronics Engineers (IEEE) 802.11 standards in a case where the access point device operates in an enhanced multi-link single radio (EMLSR) mode, a communication control unit configured to release the EMLSR mode and perform data communication with the station device in a case where the determination unit determines that the frame of the predetermined type has been received, and a transition unit configured to transition to the EMLSR mode after the data communication is performed by the communication control unit.

### Brief Description of Drawings

[Fig. 1] Fig. 1 is a diagram illustrating an example of a configuration of a network system.
[Fig. 2] Fig. 2 is a diagram illustrating an example of a hardware configuration of a communication device (AP MLD/non-AP MLD).
[Fig. 3] Fig. 3 is a diagram illustrating an example of a functional configuration of a communication device (AP MLD/non-AP MLD).
[Fig. 4] Fig. 4 is a flowchart illustrating an example of control to be performed by an AP MLD.
[Fig. 5] Fig. 5 is a schematic diagram illustrating an example of information elements to be communicated.
[Fig. 6] Fig. 6 is a schematic diagram illustrating an example of information elements to be communicated.
[Fig. 7] Fig. 7 is a schematic diagram illustrating an example of information elements to be communicated.
[Fig. 8] Fig. 8 is a flowchart illustrating an example of control to be performed by a non-AP MLD.
[Fig. 9] Fig. 9 is a flowchart illustrating an example of control to be performed by an AP MLD.
[Fig. 10] Fig. 10 is a flowchart illustrating an example of control to be performed by a non-AP MLD.
[Fig. 11] Fig. 11 is a schematic diagram illustrating a relationship between a mode and power saving.
[Fig. 12] Fig. 12 is a schematic diagram illustrating a relationship between an EMLSR mode and power saving.
[Fig. 13] Fig. 13 is a schematic diagram illustrating a modified example.

### Description of Embodiments

Hereinafter, embodiments will be described in detail with reference to the attached drawings. It should be noted that the following embodiments do not limit the invention according to the claims. Although a plurality of features is described in the embodiments, not all of these features are necessarily essential to the invention, and the plurality of features may be combined arbitrarily. Furthermore, in the attached drawings, the same reference numerals are assigned to identical or similar configurations, and redundant descriptions are omitted.

In the following embodiments or modified examples, a configuration is disclosed for promptly responding to changes in throughput or transmission delay amount required by a non-AP MLD while allowing an AP MLD to operate in a power saving manner. In addition, as another aspect, a mechanism for the AP MLD to perform a power saving operation is disclosed.

### <First Embodiment>

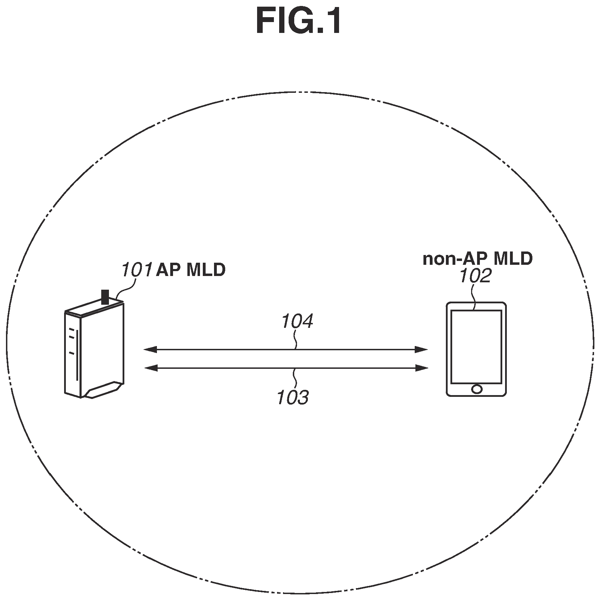

Fig. 1 illustrates an example of a configuration of a network system according to the present embodiment. The network system according to the present embodiment is configured to include one access point device (hereinafter also referred to simply as "AP", "AP STA", or "access point") and two station devices (hereinafter also referred to simply as "STA", "non-AP STA", or "station").

An AP 101 and an STA 102 are configured to execute communication of wireless frames in compliance with the IEEE 802.11bn standard, which is a successor standard to the IEEE 802.11be standard aiming for a maximum transmission rate of 46.08 Gbps.

IEEE is an abbreviation for Institute of Electrical and Electronics Engineers. In the IEEE 802.11bn that is a successor standard to the IEEE 802.11be includes high-reliability communication, low-latency communication, and improvement of throughput during congestion are listed as main features. In addition, in the IEEE 802.11bn standard, reducing power consumption at the AP is also listed as one of the objectives. A wireless frame to be communicated according to the successor standard is also referred to as an Ultra High Reliability (UHR) PPDU. PPDU is an abbreviation for Physical Layer Protocol Data Unit.

The name "UHR" is provided for convenience on the basis of the goals to be achieved by the successor standard and the features that will be key in the standard, and may become a different name in a state where the formulation of the standard has been completed. Similarly, the name "IEEE 802.11bn" may become a different name in a state where the formulation of the standard has been completed. On the other hand, it should be noted that the present specification and the appended claims are essentially applicable to all successor standards that are successor standards to the 802.11be standard.

Returning to the description of Fig. 1, the AP 101 is an access point that supports a multi-band function for providing networks on a plurality of different frequency channels. In the present embodiment, as an example, the AP 101 is illustrated as a dual-band access point that provides a network in the 2.4 GHz band and a network in the 5 GHz band.

Further, the AP 101 and the STA 102 according to the present embodiment can establish a plurality of communication links between devices and execute multi-link communication to communicate with each other. Hereinafter, a communication link is also simply referred to as a link. The AP 101 that executes multi-link communication is also referred to as an AP Multi-Link Device (AP MLD) 101, and the STA 102 that executes multi-link communication is also referred to as a non-AP MLD 102.

For example, the AP 101 can establish a link 103 with the STA 102 on a network in the 2.4 GHz band and communicate with the STA 102. In addition, in parallel with this link, the AP 101 and the STA 102 can establish, for example, a link 104 in the 5 GHz band and communicate with each other. In this case, the STA 102 executes multi-link communication for communicating via the link 103 in parallel with the link 104. In the present embodiment, a mode in which two communication links are established and simultaneous communication is performed is referred to, for convenience, as a normal mode for multi-link operation. Hereinafter, the multi-link operation is also referred to as MLO.

In the present embodiment, it is assumed that the normal mode is a simultaneous transmit and receive (STR) mode in which the STA and the AP can transmit and receive data simultaneously on two or more links. However, this is not limited thereto. For example, a restriction that a link pair of Multi-Link Operation is be used for simultaneous transmission or simultaneous reception is placed, and the normal mode may be an NSTR mode in which, under the restriction, the AP 101 and the STA 102 perform communication. NSTR is an abbreviation for non-simultaneous transmit and receive.

In this manner, by establishing links on a plurality of different frequency channels with the STA 102, the AP 101 can improve throughput in communication with the STA 102.

Meanwhile, the non-AP MLD that conforms to the IEEE 802.11be standard can also operate in a multi-link operation mode called an enhanced multi-link single radio (EMLSR) mode. A non-AP MLD that operates in this mode establishes an EMLSR link with the AP MLD. The EMLSR mode uses one link for actual data communication, but is a mode that enables dynamic switching of the link actually used for communication based on congestion conditions of wireless channels and the like and performs communication. The non-AP MLD 102 according to the present embodiment also supports the EMLSR mode. The non-AP MLD 102 that operates in the EMLSR mode and stands by for communication operates in a state of scanning the communication status of each channel of the EMLSR links. The non-AP MLD that operates in the state of scanning the communication state in the EMLSR mode does not transmit simultaneously via a plurality of links or wait to receive frames other than the initial control frame while operating in that state.

The communication of data, such as user data, using the EMLSR link between the AP MLD 101 and the non-AP MLD 102 is triggered and started by the transmission of the initial control frame. For example, upon detecting through scanning that the initial control frame is received from the AP MLD 101, the non-AP MLD 102 activates the link via which the frame has been received so as to transmit data such as user data. Then, communication of data such as user data is executed with the AP MLD using the activated link. Due to such a mechanism, the non-AP MLD 102 can execute data exchange with the AP MLD at high throughput and low latency while saving power consumption.

Meanwhile, the reduction of power consumption of the AP MLD is raised as one of the discussion topics in the consideration of the specifications of the IEEE 802.11bn standard. In view of this, in the present embodiment, the concept of the EMLSR mode is also applied to the AP MLD 101. At that time, a mechanism is provided that enables power saving operation on the AP side by the EMLSR mode and, at the same time, allows prompt response to changes in throughput or transmission delay amount required by the non-AP MLD connected to the AP MLD.

Hereinafter, a detailed description will be given. While Fig. 1 illustrates an example of the network system including one AP MLD 101 and one non-AP MLD 102, the number of non-AP MLDs constituting the network system may be greater than the number of non-AP MLDs illustrated in Fig. 1. In addition, although the AP MLD 101 and the non-AP MLD 102 are assumed to support communication (transmission and reception) of UHR PPDUs, they may also be configured to support communication of PPDUs conforming to legacy standards prior to the UHR standard. Specifically, the AP 101 and the STA 102 may also be configured to support transmission and reception of PPDUs such as the IEEE 802.11a/b/g/n/ac/ax/be standards.

In addition, the frequency bands used by the AP MLD 101 and the non-AP MLD 102 are not limited to the above-described 2.4 GHz band and 5 GHz band. For example, different frequency bands such as the 6 GHz band, the Sub1 GHz band, and the millimeter wave band may be used. Further, the AP 101 and the STA 102 can perform communication using bandwidths such as 20 MHz, 40 MHz, 80 MHz, 160 MHz, 320 MHz, 540 MHz, and 640 MHz. The bandwidth used by each communication device is not limited thereto. Moreover, in the present embodiment, a case is illustrated in which the links 103 and 104 for performing multi-link communication are links of different frequency bands, but this is not limited thereto. The AP MLD 101 can also perform multi-link communication with the non-AP MLD 102 using a plurality of links with the same frequency band and different channels.

In addition, the AP MLD 101 and the non-AP MLD 102 may also be configured to support wireless communication based on other communication standards such as Bluetooth^{®}, NFC, and Bluetooth^{®} Low Energy (LE). NFC is an abbreviation for Near Field Communication. The AP 101 and the STA 102 may also be configured to support wired communication using Ethernet^{®} cables and wired communication using optical fibers. Specific examples of the AP 101 include a wireless local area network (LAN) router and a personal computer (PC), but are not limited thereto. The AP MLD 101 and the non-AP MLD 102 may also be information processing devices such as wireless chips that support transmission and reception of UHR PPDUs. In this case, various controls can be executed by hardware circuits inside the wireless chips. It is also possible to configure the wireless chip so that various processes are executed through cooperation of processors such as application-specific instruction set processors (ASIPs), memories, and hardware circuits inside the wireless chip. ASIP is an abbreviation for Application-Specific Instruction Set Processor.

Specific examples of the STA 102 include a camera, a tablet, a smartphone, a PC, a mobile phone, a video camera, and a wearable device such as smart glasses, but are not limited thereto.

### <Hardware Configuration of Communication Device>

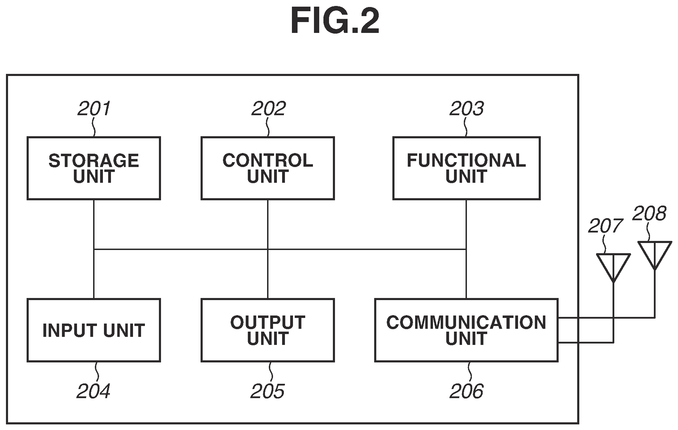

Fig. 2 illustrates an example of a hardware configuration of a communication device (AP MLD 101, non-AP MLD 102). As one example of its hardware configuration, the communication device includes a storage unit 201, a control unit 202, a functional unit 203, an input unit 204, an output unit 205, a communication unit 206, and antennas 207 and 208.

The storage unit 201 is configured by both or either of a read-only memory (ROM) and a random access memory (RAM), and stores programs for performing various operations to be described below and various types of information such as communication parameters for wireless communication. RAM is an abbreviation for Random Access Memory. ROM is an abbreviation for Read Only Memory. , In addition to memories such as a ROM and a RAM, a storage medium, such as a nonvolatile storage device like a hard disk or a solid-state drive (SSD), may be used as the storage unit 201.

The control unit 202 is configured by, for example, a processor such as a central processing unit (CPU) or a micro processing unit (MPU), an application-specific integrated circuit (ASIC), a digital signal processor (DSP), or a field-programmable gate array (FPGA). Here, CPU is an abbreviation for Central Processing unit, and MPU is an abbreviation for Micro Processing Unit. The control unit 202 controls the entire device by executing programs stored in the storage unit 201 and operating hardware circuits such as ASICs. The control unit 202 may also be configured to control the entire device through cooperation between the programs stored in the storage unit 201 and an operating system (OS).

The control unit 202 also controls the functional unit 203 to execute predetermined processing such as image capturing, printing, and projection. The functional unit 203 is hardware for the device to execute the predetermined processing. For example, if the communication device is a camera, such as a digital still camera, or a smartphone including a camera, the functional unit 203 functions as an image capturing unit and performs processing for capturing surrounding images via a camera unit (not illustrated) included in the communication device. Further, for example, if the communication device is a printer, the functional unit 203 functions as a printing unit and performs printing processing on a sheet such as paper based on print data obtained by wireless communication from an external source. Furthermore, for example, if the communication device is a projector or smart glasses, the functional unit 203 functions as a projection unit and performs projection processing of image data or video data obtained by wireless communication from an external source. In the case of smart glasses, the projection surface is the retina of the end user or the like. The data to be processed by the functional unit 203 may be data stored in the storage unit 201, or data communicated with another AP or STA via the communication unit 206 to be described below. Further, the communication device such as the AP 101 can provide a network storage function such as Network Attached Storage (NAS). This function is provided to another communication device as a web service such as a network storage service. For example, a communication device such as an STA connects to a network storage service provided by the AP MLD 101 or the like using a protocol such as Server Message Block (SMB), File Transfer Protocol (FTP), or Web-based Distributed Authoring and Versioning (WebDAV). Then, the communication device such as the STA uploads files to the storage service and downloads files within the storage. The data communication for such uploading and downloading is implemented by communicating UHR PPDUs between devices.

The input unit 204 receives various operations from a user. The output unit 205 performs various output operations to the user. Here, the output by the output unit 205 includes at least one of display on a screen, audio output by a speaker, and vibration output. The input unit 204 and the output unit 205 may be implemented as a single module, such as a touch panel.

The output unit 205 functions as a display means for presenting information to the user. The input unit functions as a reception means for receiving user operations.

The communication unit 206 controls wireless communication in compliance with the series of IEEE 802.11 standards and controls Internet Protocol (IP) communication. In the present embodiment, the communication unit 206 can execute communication control for transmitting and receiving UHR PPDUs, which are wireless frames conforming to the UHR standard, and PPDUs conforming to the standards prior to the UHR standard, in cooperation with the antennas 207 and 208. The antennas 207 and 208 are, for example, antennas capable of transmitting and receiving signals in at least one of the frequency bands such as the sub-GHz band, 2.4 GHz band, 5 GHz band, 6 GHz band, and millimeter wave band. In the present embodiment, as an example, a communication device including two antennas is illustrated, but this is not limited thereto. The number of antennas may be three or more.

If each communication device supports the above-described NFC standard, Bluetooth^{®} standard, wired communication standard, and the like, the communication unit 206 may be configured to control wireless communication or wired communication in compliance with these communication standards. The communication unit 206 in each of the AP MLD 101 and the non-AP MLD 102 includes a hardware circuit for decoding and encoding signals to be communicated via each link. The antennas and hardware circuits are configured to allow individual power control. It is also possible to configure the device to include a communication unit corresponding to each link.

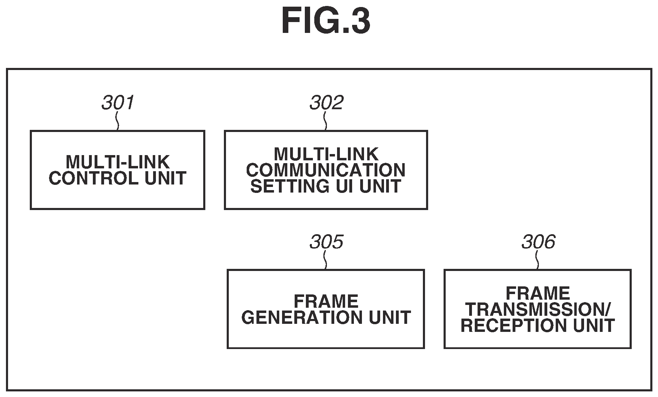

Next, a functional configuration in each of the AP MLD 101 and the non-AP MLD 102 will be described with reference to Fig. 3. The communication device such as the AP MLD 101 and the non-AP MLD 102 includes functional units such as a multi-link control unit 301, a multi-link communication setting user interface (UI) unit 302, a frame generation unit 305, and a frame transmission/reception unit 306.

The multi-link control unit 301 is a functional block for controlling communication start processing to establish one or more links used for the communication device to perform wireless communication with an opposing device, mode determination, change processing, link addition/deletion processing after communication is started, and communication termination processing for deleting all links. Specifically, connection processing includes Authentication processing, Association processing, and 4-way handshake processing. In the case of the AP MLD 101, the opposing device is an STA such as the non-AP MLD 102, and in the case of the non-AP MLD 102, the opposing device is an AP such as the AP MLD 101. In addition, the multi-link control unit 301 also performs control related to the power saving mode. Specifically, if the power saving mode is set to be activated, power control such as stopping power supply to some hardware circuits is performed.

The multi-link communication setting user interface (UI) unit 302 provides a setting screen as a UI for the user to input settings related to multi-link communication. The UI unit 302 is a functional block that receives user operations on the setting screen via the input unit 204 and stores the settings in the storage unit 201 as operation settings for the communication device. The UI unit 302 receives a setting change operation regarding whether to activate the power saving mode via a setting screen (not illustrated). The UI unit 302 also stores the operation settings related to the AP power saving mode corresponding to the setting change operation in the storage unit 201. The operation settings are appropriately used for, for example, determination as to whether to execute control in flowcharts to be described below.

Returning to the description of Fig. 3, the frame generation unit 305 is a block that generates UHR PPDUs that are wireless frames for communication with an external device. The frame transmission/reception unit 306 transmits the wireless frames generated by the frame generation unit 305 and receives wireless frames from a counterpart device. In the case of the non-AP MLD 102, it transmits a Probe Request frame, an Association Request frame, and a data frame to the AP. The non-AP MLD 102 also transmits an Authentication Request frame and other frames for connection processing to the AP. The non-AP MLD 102 also transmits a Request To Send (RTS) frame, a Null data PPDU (NDP) frame, and an enhanced multi-link (EML) Operating Mode Notification frame to the AP. The non-AP MLD 102 also transmits an initial control frame to the AP.

In the case of the AP MLD 101, it transmits a Beacon frame, a Probe Response frame, an Association Response frame, and a data frame to the STA. The AP MLD 101 also transmits an Association Request frame, an Authentication Request frame, other frames for connection processing, and the like to the STA. The AP MLD 101 also transmits the above-described initial control frame to the STA serving as a non-AP MLD.

### <Communication Control using EMLSR Mode>

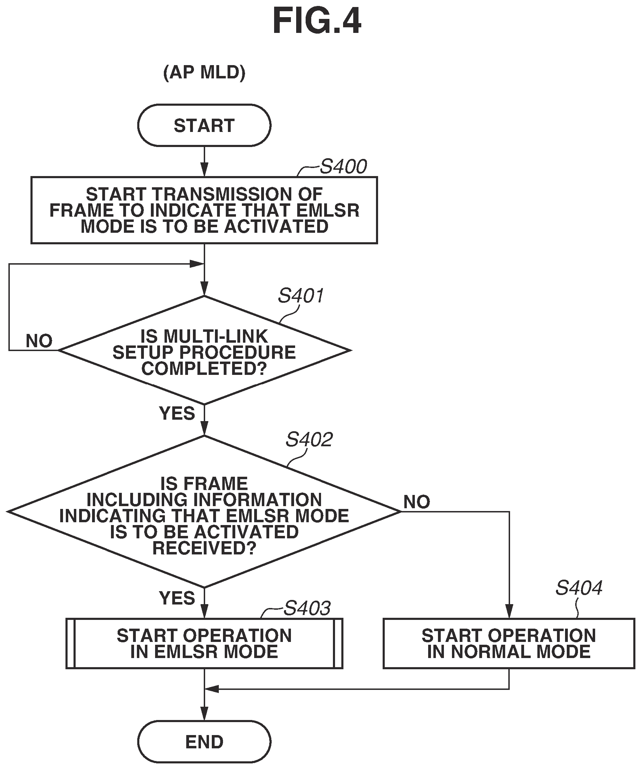

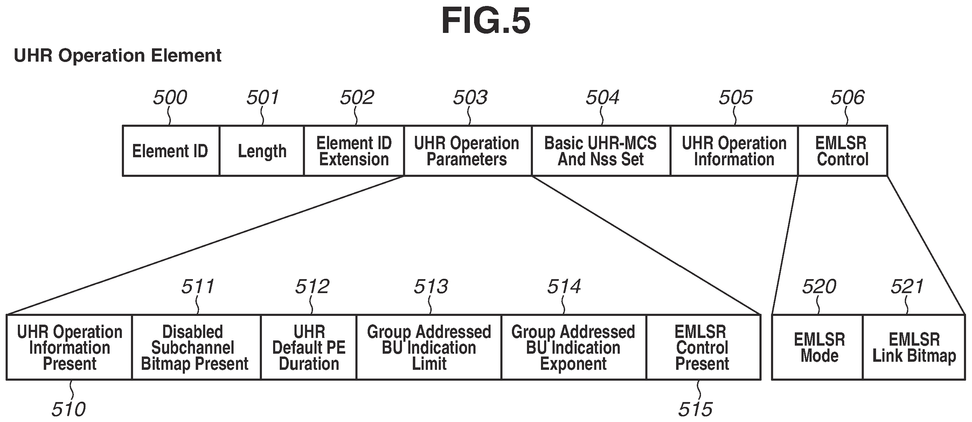

Next, communication control using the EMLSR mode according to the present embodiment will be described with reference to flowcharts illustrated in Fig. 4 and Figs. 8 to 10 and schematic diagrams of information elements in Figs. 5 to 7.

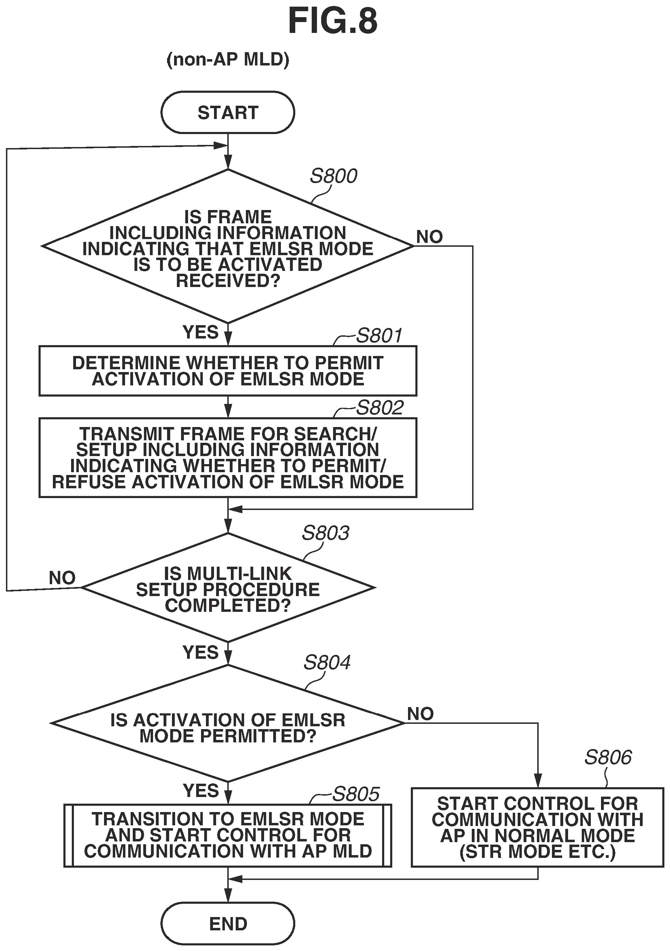

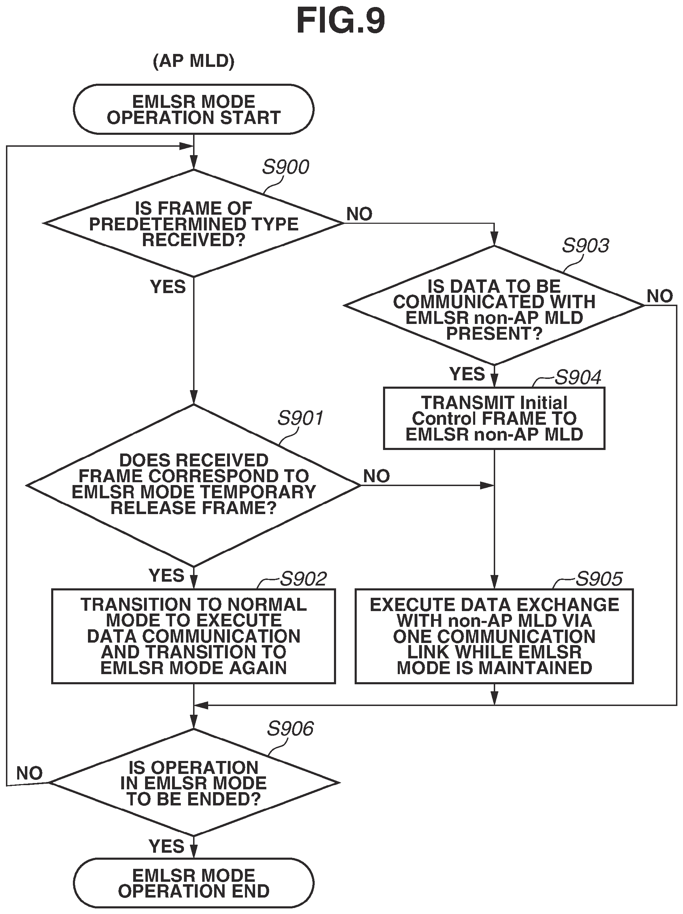

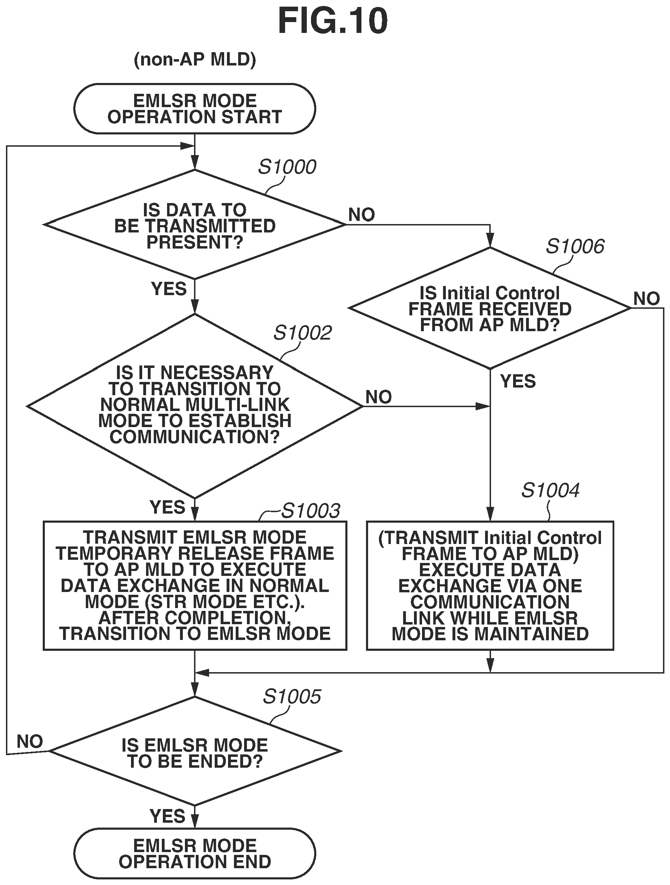

Figs. 4 and 9 are flowcharts each illustrating an example of communication control in the AP MLD 101, and Figs. 8 and 10 are flowcharts each illustrating an example of communication control in the non-AP MLD 102. Figs. 5 to 7 are schematic diagrams each illustrating information elements to be communicated between devices.

Each process illustrated in the flowcharts of Figs. 4 and 9 is executed by the processor of the control unit 202 in the AP MLD 101 executing a computer program stored in the storage unit 201. Some of the processes, such as transmission and modulation, may be implemented through cooperation between the processor of the control unit 202 various processors, ASICs, DSPs, and FPGAs that constitute the communication unit 206, antennas, and the ASICs, DSPs, FPGAs that constitute the control unit 202. However, this is not limited thereto, and it is of course possible to configure the communication unit 206 and the antennas to cooperate to execute each process illustrated in the flowcharts. When the subject of the process is to be clearly indicated, the functional units illustrated in Fig. 3 are described as the subject.

Each process in the flowcharts of Figs. 8 and 10 is executed by the processor of the control unit 202 in the non-AP MLD 102 executing a computer program stored in the storage unit 201. Some of the processes, such as transmission and modulation, may be implemented through cooperation between the processor of the control unit 202, various processors, ASICs, DSPs, and FPGAs that constitute the communication unit 206, and ASICs, DSPs, FPGAs, and the like that constitute the control unit 202.

However, this is not limited thereto, and it is of course possible to configure the communication unit 206 and the antennas to cooperate to execute each process illustrated in the flowcharts. When the subject of the process is to be clearly indicated, the functional units illustrated in Fig. 3 are described as the subject.

The operation of the AP MLD 101 will be described with reference to Fig. 4. Each process illustrated in Fig. 4 is an excerpt of a series of processes from when the AP MLD 101 starts operating as MLO to when the AP MLD 101 starts operating in the EMLSR mode, which is a mode of MLO. In a case where the control unit 202 of the AP MLD 101 determines that an operation setting for not using the power saving mode is stored in the storage unit 201, the control unit 202 executes control of a normal mode (not illustrated) in place of the control illustrated in Fig. 4. In other words, in a case where an operation setting for using the power saving mode is stored in the storage unit 201, each control illustrated in Fig. 4 is executed.

The normal mode (not illustrated) will be briefly described. The AP MLD 101 in the normal mode constructs and maintains two networks described above. Then, the AP MLD 101 allows the STA such as the non-AP MLD 102 to connect to the AL MLD 101 in the EMLSR mode. Further, for the STA connected to the AP MLD 101 in the EMLSR mode, the activation of the EMLSR link is performed, triggered by the initial control frame as described above. Then, communication of data such as user data may be executed using the activated EMLSR link. In addition, the AP MLD 101 in the normal mode provides data communication using a plurality of links simultaneously, as necessary, to the non-AP MLD connected to the AP MLD 101 in the STR mode or the NSTR mode.

Returning to the description of Fig. 4, control will be described in a case where an operation setting to use the power saving mode has been made. A search phase of an MLO device in which the STA searches for a connection destination AP and an MLO setup phase in which the STA performs a multi-link connection to the AP found as a result of the search will now be described. In step S400, the multi-link control unit 301 cooperates with the frame generation unit 305, the frame transmission/reception unit 306, the communication unit 206, and the antennas 207 and 208 and executes control to transmit a frame including information indicating that the EMLSR mode is to be activated. The frame transmitted in step S400 is the frame transmitted in the search phase or the MLO setup phase of the MLO device.

More specifically, the AP MLD 101 includes the information indicating that the EMLSR mode is to be activated in a Beacon frame or a Probe Response frame. Hereinafter, the information indicating that the EMLSR mode is to be activated is simply referred to as "activation information". In addition, information indicating that the EMLSR mode is to be deactivated, which will be described below, is simply referred to as "deactivation information".

The Beacon frame is a frame that is periodically transmitted by the AP MLD 101 at a predetermined cycle (e.g., 100 milliseconds). In addition, the Probe Response frame is a frame to be transmitted as a response to a Probe Request frame in a case where the Probe Request frame is received from the STA such as the non-AP MLD 102. This is not limited thereto, and information indicating that the EMLSR mode is to be activated or deactivated may be transmitted at any other timing or in any other frame within the search phase or the connection phase of the connection destination.

Although details will be described below, when the search processing in the search phase is completed and the connection processing to the AP MLD 101 is started at the STA of the counterpart device, the AP 101 performs a multi-link setup procedure.

The AP MLD 101 may include the activation information in an Association Response frame or a Reassociation Response frame to be transmitted in the multi-link setup procedure in. These frames are response frames that store response information when an Association Request frame or a Reassociation Request frame is received from the STA such as the non-AP MLD 102.

Further, the AP MLD 101 may transmit, to the STA such as the non-AP MLD 102, a frame including a UHR Operation element that controls the operation of a device that supports the IEEE 802.11UHR standard, and may include the activation information in the UHR Operation element.

A specific example where the activation information is included in the UHR Operation element will be described with reference to Fig. 5. The UHR Operation element is composed of fields 500 to 506. The UHR Operation element includes a UHR Operation Parameters field 503 and an EMLSR Control field 506. The UHR Operation element also includes information of the same type as the EHT Operation element defined in the IEEE 802.11be.

Each of the Element ID field 500, the Length field 501, and the Element ID Extension field 502 includes information similar to the field of the same name defined in the IEEE 802.11be standard.

The UHR Operation Parameters field 503 includes an EMLSR Control Present sub-field 515. The field 503 also includes information similar to the EHT Operation Parameters field defined in the IEEE 802.11be standard.

The Basic UHR-MCS And Nss Set field 504 includes information similar to the Basic EHT-MCS And Nss Set field defined in the IEEE 802.11be standard. Further, the UHR Operation Information field 505 includes information similar to the EHT Operation Information field. Then, the EMLSR Control field 506 is a field including information for controlling the operation of a device related to the EMLSR mode. This field will be described in detail below.

The UHR Operation Parameters field 503 is composed of sub-fields 510 to 515. The UHR Operation Information Present sub-field 510 includes information similar to the EHT Operation Information Present sub-field defined in the IEEE 802.11be standard. The Disabled Subchannel Bitmap Present sub-field 511 includes information similar to the sub-field of the same name defined in the IEEE 802.11be standard. The UHR Default PE Duration sub-field 512 includes information similar to the EHT Default PE Duration sub-field defined in the IEEE 802.11be standard. The Group Addressed BU Indication Limit sub-field 513 includes information similar to the sub-field of the same name defined in the IEEE 802.11be standard. Further, the Group Addressed BU Indication Exponent sub-field 514 includes information similar to the sub-field of the same name defined in the IEEE 802.11be standard. The EMLSR Control Present sub-field 515 indicates whether the UHR Operation element includes the EMLSR Control field 506. This sub-field is composed of one bit. In a case where its value is "1", it means that the UHR Operation element includes the EMLSR Control field 506. On the other hand, in a case where its value is "0", it means that the UHR Operation element does not include the EMLSR Control field 506.

The EMLSR Control field 506 is present when the value in the EMLSR Control Present sub-field 515 is "1", and is not present when the value is "0". This field is composed of sub-fields 520 and 521. The EMLSR Mode sub-field 520 indicates whether the EMLSR mode is to be activated.

This sub-field is composed of one bit. In a case where its value is "1", it means that the EMLSR mode is to be activated. On the other hand, in a case where its value is "0", it means that the EMLSR mode is to be deactivated. The EMLSR Link Bitmap sub-field 521 indicates the link ID of a link used as the EMLSR link. This sub-field is composed of 16 bits, and the i-th bit corresponds to the state of the link whose Link ID is "i". For example, bit 0 corresponds to the state of the link whose link ID is "0", and bit 1 corresponds to the state of the link whose link ID is "1".

Storing "1" in the EMLSR Mode sub-field 520 is an example of including activation information in a frame. In addition, storing "0" in the EMLSR Mode sub-field 520 is an example of including deactivation information in a frame.

The AP MLD 101 that has transmitted the activation information receives information indicating whether to permit or refuse the activation of the EMLSR mode by the AP MLD as a response from the MLD device such as the non-AP MLD 102 to the activation information. Hereinafter, information that permits the AP MLD to activate the EMLSR mode is referred to as permission information, and information that refuses the AP MLD from activating the EMLSR mode is referred to as refusal information.

The information can be included in a Probe Request frame, an Association Request frame, or a Reassociation Request frame transmitted from the MLD device such as the non-AP MLD 102.

Specifically, the MLD device such as the non-AP MLD 102 can be configured to include a Probe Request Multi-Link element in the Probe Request frame. Permission information or refusal information may be included therein.

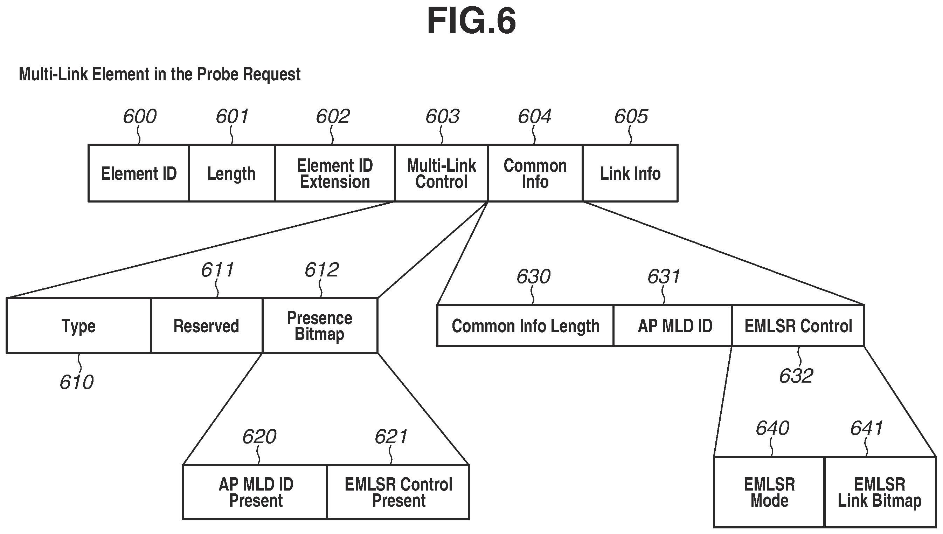

Fig. 6 illustrates an example of the Probe Request Multi-Link element. The Probe Request Multi-Link element is composed of fields 600 to 605. The Probe Request Multi-Link element includes within a Multi-Link Control field 603 and a Common Info field 604. The fields 603 and 604 include information similar to the elements of the same names defined in the IEEE 802.11be standard, except for some sub-fields. The Element ID field 600, the Length field 601, and the Element ID Extension field 602 each include information similar to the field of the same name defined in the IEEE 802.11be. The Multi-Link Control field 603 includes information similar to the field of the same name defined in the IEEE 802.11be standard, except for some sub-fields in a Presence Bitmap sub-field 612. This field will be described in detail below. The Common Info field 604 includes information similar to the field of the same name defined in the IEEE 802.11be standard, except for including the EMLSR Control sub-field 632.

This field will be described in detail below. The Link Info field 605 includes information similar to the field of the same name defined in the IEEE 802.11be standard.

The Multi-Link Control field 603 is composed of sub-fields 610 to 612. The Type sub-field 610 and the Reserved sub-field 611 each include information similar to the sub-field of the same name defined in the IEEE 802.11be standard.

The Presence Bitmap sub-field 612 is composed of sub-fields 620 and 621. The AP MLD ID Present sub-field 620 includes information similar to the sub-field of the same name defined in the IEEE 802.11be standard. The EMLSR Control Present sub-field 612 indicates whether the Probe Request Multi-Link element includes the EMLSR Control sub-field 632 in the Common Info field 604. This sub-field is composed of one bit. In a case where its value is "1", it means that the Probe Request Multi-Link element includes the EMLSR Control sub-field 632. On the other hand, in a case where its value is "0", it means that the Probe Request Multi-Link element does not include the EMLSR Control sub-field 632.

The Common Info field 604 is composed of sub-fields 630 to 632. The Common Info Length sub-field 630 and the AP MLD ID sub-field 631 each include information similar to the sub-field of the same name defined in the IEEE 802.11 be standard.

The EMLSR Control sub-field 632 is present when the value in the EMLSR Control Present sub-field 621 is "1", and is not present when the value is "0". This sub-field is composed of an EMLSR Mode sub-field 640 and an EMLSR Link Bitmap sub-field 641. Setting the EMLSR Mode sub-field 640 to "1" indicates that the activation of the EMLSR mode by the AP MLD 101 is permitted. On the other hand, setting the EMLSR Mode sub-field 640 to "0" indicates that the activation of the EMLSR mode by the AP MLD 101 is not permitted.

Further, in a case where the MLD device responds with permission information or refusal information in an Association Request frame or a Reassociation Request frame, the information is included in the Basic Multi-Link element.

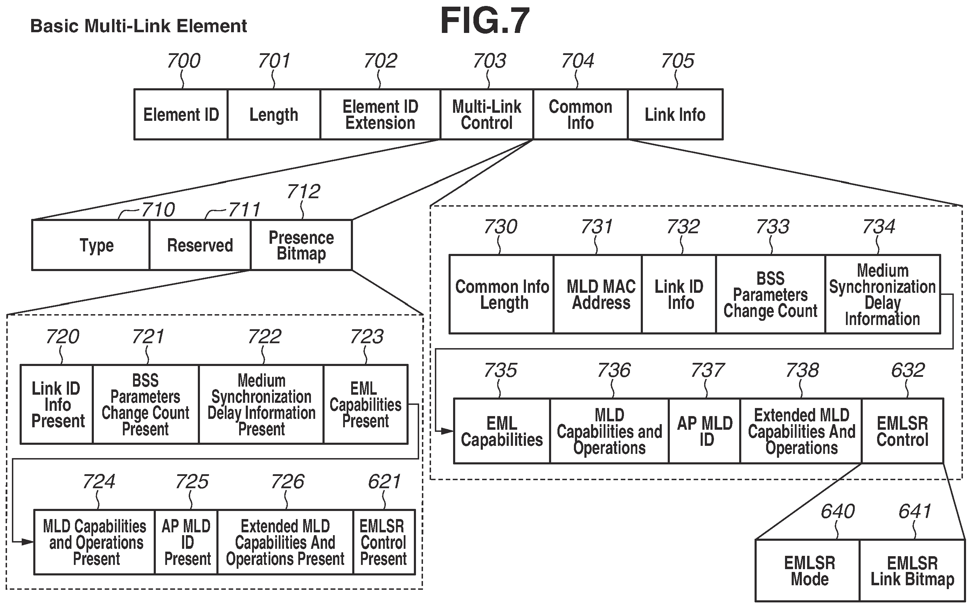

Information elements in this case will be described with reference to Fig. 7. Fig. 7 illustrates an example of the configuration of a Basic Multi-Link element included in an Association Request frame or a Reassociation Request frame transmitted from the non-AP MLD 102. The Basic Multi-Link element is composed of fields 700 to 705. Each field includes information similar to the element of the same name defined in the IEEE 802.11be, except for some sub-fields in the Multi-Link Control field 703 and some sub-fields in the Common Info field 704. The Element ID field 700, the Length field 701, and the Element ID Extension field 702 each include information similar to the field of the same name defined in the IEEE 802.11be standard. The Multi-Link Control field 703 includes information similar to the field of the same name defined in the IEEE 802.11be standard, except for some sub-fields in the Presence Bitmap sub-field 712. This field will be described in detail below. The Common Info field 704 includes information similar to the field of the same name defined in the IEEE 802.11be standard, except for including the EMLSR Control sub-field 739. This field will be described in detail below. The Link Info field 705 includes information similar to the field of the same name defined in the IEEE 802.11be standard. The Multi-Link Control field 703 is composed of sub-fields 710 to 712. The Type sub-field 710 and the Reserved sub-field 711 each include information similar to the sub-field of the same name defined in the IEEE 802.11be standard.

The Presence Bitmap sub-field 712 is composed of sub-fields 720 to 726 and the EMLSR Control Present sub-field 621.

The sub-field 712 includes the Link ID Info Present sub-field 720, the BSS Parameters Change Count Present sub-field 721, the Medium Synchronization Delay Information Present sub-field 722, the EML Capabilities Present sub-field 723, the MLD Capabilities And Operations Present sub-field 724, the AP MLD ID Present sub-field 725, and the Extended MLD Capabilities And Operations Present sub-field 726. The sub-fields 720 to 726 each include information similar to the sub-field of the same name defined in the IEEE 802.11be standard. The EMLSR Control Present sub-field 621 is identical to that in the Probe Request Multi-Link element described above.

The Common Info field 704 is composed of sub-fields 730 to 738 and the EMLSR Control sub-field 632. The field 704 includes the Common Info Length sub-field 730, the MLD MAC Address sub-field 731, the Link ID Info sub-field 732, the BSS Parameters Change Count sub-field 733, the Medium Synchronization Delay Information sub-field 734, the EML Capabilities sub-field 735, the MLD Capabilities And Operations sub-field 736, the AP MLD ID sub-field 737, and the Extended MLD Capabilities And Operations sub-field 738. The fields 730 to 737 each include information similar to the sub-field of the same name defined in the IEEE 802.11be standard. The EMLSR Control sub-field 632 is identical to that in the Probe Request Multi-Link element described above. That is, the Basic Multi-Link element also includes the EMLSR Mode sub-field 640 and the EMLSR Link Bitmap sub-field 641 described above.

If the non-AP MLD 102 transmits permission information, "1" is stored in the EMLSR Mode sub-field of the UHR Operation element. On the other hand, if refusal information is transmitted, "0" is stored in the EMLSR Mode sub-field of the UHR Operation element.

Returning to the description of Fig. 4, the AP MLD 101 and the non-AP MLD 102 exchange frames including information related to multi-link communication described above with reference to Figs. 5 to 7, thereby executing the multi-link setup procedure. In other words, they exchange requests and acceptance or rejection regarding which link to use in multi-link communication and which mode to operate in within MLO. Then, multi-link communication is established in the agreed operation mode via the agreed link.

In step S401, the control unit 301 determines whether the multi-link setup procedure is normally completed. In a case where it is determined that the multi-link setup procedure is normally ended, the processing proceeds to step S402, and in a case where it is determined that the multi-link setup procedure is not normally completed, the exchange of frames for various setup procedures is continued.

In step S402, the control unit 301 determines whether a frame including permission information is received during the exchange indicated in the above-described procedure with the AP MLD 102 with which the multi-link communication has been established.

In a case where it is determined that the frame including permission information is received, the processing proceeds to step S403. On the other hand, in a case where it is not determined that the frame including permission information is received (that is, in a case where it is determined that a frame including refusal information is received, or in a case where a response frame does not include an information element corresponding to refusal information or permission information), the processing proceeds to step S404.

In step S403, the control unit 301 starts the EMLSR mode in cooperation with the units such as the communication unit 206 and the antennas 207 and 208. Specific control processing to be performed after the EMLSR mode is started will be described below with reference to the flowchart illustrated in Fig. 9.

On the other hand, in step S404, the control unit 301 starts operation in the normal mode in cooperation with the units such as the communication unit 206 and the antennas 207 and 208. The operation in the normal mode may perform the data communication control described at the beginning of Fig. 4.

Subsequently, the processing of the search phase to be executed on the non-AP MLD 102 side and the processing of the MLO setup phase will be described with reference to Fig. 8. This operation is executed according to the start of the processing of the search phase in which the non-AP MLD 102 searches for an AP MLD that supports MLO. Each process illustrated in Figs. 8 and 10 is an excerpt of the processing in which the non-AP MLD 102 determines the mode of MLO and performs multi-link communication with the AP MLD 101.

The non-AP MLD 102 searches for surrounding APs by scanning Beacon frames transmitted from surrounding APs, or by transmitting Probe Request frames to surrounding APs and receiving Probe Response frames. Then, by exchanging multi-link related information elements described above with reference to Figs. 5 to 7, an AP MLD that supports MLO can be found, and a connection with the found AP MLD can be established.

In step S800, the control unit 301 determines whether a response frame to the search or a frame for MLO setup that includes information (activation information) indicating that the EMLSR mode is to be activated is received from the AP MLD 101.

In a case where it is determined that a frame including activation information is received, the processing proceeds to step S801. On the other hand, in a case where it is determined that a frame including activation information is not received (that is, in a case where it is determined that a frame including deactivation information is received, or in a case where it is determined that a frame including neither deactivation information nor activation information is received), the processing proceeds to step S802.

In step S801, the control unit 301 determines whether to permit the activation of the EMLSR mode. At this time, the non-AP MLD 101 can be configured to make the determination based on information preliminarily stored in the storage unit 201. Subsequently, in step S802, the control unit 301 cooperates with the units such as the generation unit 305, the transmission/reception unit 306, the communication unit 206, and the antennas 207 and 208, and transmits a search frame and/or a frame for setup including information corresponding to the determination result. Specifically, in a case where it is determined that the activation of the EMLSR mode is permitted, the non-AP MLD 102 transmits the frame including permission information. Further, in a case where it is determined that the activation of the EMLSR mode is not permitted, the non-AP MLD 102 transmits the frame including refusal information.

In step S803, the control unit 301 determines whether the multi-link setup procedure is normally completed. In a case where it is determined that the multi-link setup procedure is normally terminated, the processing proceeds to step S804, and in a case where it is determined that the multi-link setup procedure is not normally completed, the processing proceeds to step S800 to continue the exchange of frames for various procedures such as search and setup.

In step S804, the control unit 301 determines whether permission to activate the EMLSR mode is presented to the AP MLD 101 in various procedures such as search and setup. In a case where the control unit 301 determines that permission to activate the EMLSR mode is presented, the processing proceeds to step S805. On the other hand, in a case where the control unit 301 does not determine that permission to activate the EMLSR mode is presented (that is, in a case where refusal information is transmitted, or in a case where activation/deactivation information is not included in the frame received from the AP), the processing proceeds to step S806.

In step S805, the control unit 301 starts operation in the EMLSR mode in cooperation with the generation unit 305, the transmission/reception unit 306, the communication unit 206, the antennas 207 and 208, and the like. This operation will be described in detail below with reference to Fig. 10. On the other hand, in step S806, the control unit 301 starts control for communication with the AP in the normal mode (STR mode etc.) in cooperation with the generation unit 305, the transmission/reception unit 306, the communication unit 206, the antennas 207 and 208, and the like. In the normal mode, general multi-link communication is executed, such as performing simultaneous data communication using a plurality of link pairs each having established communication.

### <Communication Control in EMLSR Mode>

Next, communication control after starting operation in the EMLSR mode will be described with reference to Figs. 9 and 10.

First, control after starting operation in the EMLSR mode in the AP MLD 101 will now be described with reference to Fig. 9. In step S900, the control unit 301 of the AP MLD 101 listens to a plurality of EMLSR links in cooperation with the communication unit 206, and determines whether a frame of a predetermined type is received from an EMLSR non-AP MLD. The EMLSR non-AP MLD means a non-AP MLD, such as the non-AP MLD 102, which has already established a connection with the AP MLD 101 and operates in the EMLSR mode.

The EMLSR links to which the AP MLD 101 listens in step S900 are the links indicated in the procedure described with reference to Fig. 4. That is, they are the links that are presented by the AP MLD 101 to the EMLSR non-AP MLD in the EMLSR Link Bitmap sub-field 521 of the UHR Operation element. In the present embodiment, the link 103 and the link 104 described with reference to Fig. 1 are presented as EMLSR links.

At this time, using the antennas 207 and 208, the AP MLD 101 listens to both of the channel corresponding to the link 103 and the channel corresponding to the link 104 for the received signal.

The frame of the predetermined type is a frame that triggers an operation to execute data exchange in a state where the EMLSR mode is temporarily released, or an initial control frame for executing data exchange while the EMLSR mode is maintained. Hereinafter, the frame that triggers an operation to execute data exchange in the state where the EMLSR mode is temporarily released is referred to as an "EMLSR mode temporary release frame".

These frames may be Media Access Control (MAC) frames newly defined to indicate that they are for temporary release. Further, the initial control frame may be a MAC frame newly defined for the purpose of conveying from the STA to the AP the intention to start communication over the EMLSR link. These frames may be management frames or data frames.

Furthermore, an existing control frame or data frame of a specific type may be regarded as the EMLSR mode temporary release frame in the case of operating in the EMLSR mode.

For example, an RTS frame, which is a frame for requesting a transmission opportunity by the non-AP MLD, is an example of the EMLSR mode temporary release frame. An NDP frame, which is a data frame that does not include substantial data, is also an example of the EMLSR mode temporary release frame.

It should be noted that the EMLSR mode temporary release frame and the initial control frame are MAC frames of different types or the same type, but are defined as MAC frames with different values in the fields in the respective frames.

Further, an EML Operating Mode Notification frame in which the value in the EMLSR Mode sub-field of the EML Control field is "0" is an example of the EMLSR mode temporary release frame.

Subsequently, in step S901, the control unit 301 determines whether the frame received in step S900 is an EMLSR mode temporary release frame. In a case where the frame received in step S900 is an EMLSR mode temporary release frame, the processing proceeds to step S902. In a case where the frame received in step S900 is not an EMLSR mode temporary release frame (that is, in a case where it is an initial control frame), the processing proceeds to step S905.

In step S902, the control unit 301 temporarily releases the EMLSR mode and transitions to the normal mode. Then, an exchange is performed with the non-AP MLD that is the source of the EMLSR mode temporary release frame to reconfigure the operation mode of MLO. Then, the operation mode of MLO with the non-AP MLD is switched to a communication mode, such as the STR mode or the NSTR mode, which uses a plurality of links. Then, data communication using a plurality of links is executed. When the data communication is completed, the AP MLD 101 re-transitions to the EMLSR mode. In the case of performing the re-transition, the AP MLD 101 may notify activation information to the non-AP MLD connected to the AP MLD 101. Alternatively, the AP MLD 101 may automatically re-transition to the EMLSR mode upon completion of the data communication. When the re-transition to the EMLSR mode is completed, the control unit 301 proceeds the processing to step S906. In step S902, data communication can be performed using a plurality of links simultaneously. Therefore, data exchange can be achieved with higher throughput or smaller transmission delay, compared to the operation of performing data communication via one EMLSR link while maintaining the EMLSR mode, which will be described below.

Next, control when it is not determined that a frame of a predetermined type is received will be described. The control unit 301 determines whether there is data to be communicated with the EMLSR non-AP MLD. For example, in a case where data to be transmitted to the EMLSR non-AP MLD occurs, the control unit 301 determines that there is data to be communicated with the EMLSR non-AP MLD. The data is, for example, data addressed to the EMLSR non-AP MLD, which has been received from an external network, such as the Internet, via a wired LAN or the like. It may also be data addressed to the EMLSR non-AP MLD, which has been received from a communication device or the like connected to a wired LAN.

In a case where the control unit 301 determines that there is data to be communicated with the EMLSR non-AP MLD, the processing proceeds to step S904, and in a case where it is not determined that there is data to be communicated with the EMLSR non-AP MLD, the processing proceeds to step S906.

In step S904, the control unit 301 cooperates with the generation unit 305, the transmission/reception unit 306, the communication unit 206, the antennas 207 and 208, and the like, and transmits an initial control frame to the EMLSR non-AP MLD that is the communication destination of the data. More specifically, the AP MLD 101 transmits the initial control frame defined in the IEEE 802.11 be standard to the EMLSR non-AP MLD that is the communication destination of the EMLSR data via one of the link 103 and the link 104. When the transmission is completed, the processing proceeds to step S905. The control unit 301 may determine which one of the links is used to transmit the initial control frame based on communication congestion or the like.

In step S905, the control unit 301 cooperates with the generation unit 305, the transmission/reception unit 306, the communication unit 206, the antennas 207 and 208, and the like, and activates one link via which the initial control frame has been transmitted or received so that normal data communication can be performed. Then, data exchange with the non-AP MLD is executed using the activated link. That is, data exchange using the EMLSR link activated for communication is executed while the EMLSR mode is maintained.

After receiving the EMLSR mode temporary release frame or receiving the initial control frame, the AP MLD 101 may transmit a response frame to the transmission source of the frame and then execute data exchange. As the response frame, a Clear To Send (CTS) frame or an ACK frame may be used. In addition, in a case where the AP MLD 101 may perform control equivalent to CTS in a case where it transmits the initial control frame to the non-AP MLD so as to transmit a data frame. In this case, the AP MLD 101 may execute data exchange after transmitting a CTS-to-self frame via the activated EMLSR link.

The EMLSR mode temporary release frame or the initial control frame and the subsequent data exchange may be performed in a single frame exchange sequence. Alternatively, each may be included in different frame exchange sequences. In the present embodiment, "data exchange" means a series of exchanges including a process of transmitting a data frame to one side from the other side, and transmission of a frame including information indicating, from the one side to the other side, that the data frame has been received. The frame including information indicating, from the one side to the other side, that the data frame has been received is, for example, an ACK frame or a Block ACK frame.

In step S906, the control unit 301 determines whether the operation in the EMLSR mode is to be ended. Specifically, in a case where it is determined that the AP MLD 101 has received a setting change operation to deactivate the power saving mode, it is determined that the operation in the EMLSR mode is to be ended. Furthermore, for example, in a case where the amount of data communication with the non-AP MLD tends to increase, or in a case where it is inferred, based on past communication trends and the like, that the amount of data communication tends to increase, it is determined that the operation in the EMLSR mode is to be ended. In addition, in a case where the number of STAs connected to the non-AP MLD exceeds a predetermined value, it may be determined that the operation in the EMLSR mode is to be ended. On the other hand, in a case where the amount of data communication is not on an increasing trend, the control unit 301 determines that the operation in the EMLSR mode is not to be ended.

In a case where the control unit 301 determines that the operation in the EMLSR mode is not to be ended, the processing proceeds to step S900. On the other hand, in a case where the control unit 301 determines that the operation in the EMLSR mode is to be ended, it transmits a frame notifying that the operation is to be ended. This frame may be a frame including information (deactivation information) indicating that the EMLSR mode is to be deactivated. The frame may also be an EML Operating Mode Notification frame in which the value of the EMLSR Mode sub-field of the EML Control field is "0". When the operation in the EMLSR mode is ended, the AP MLD 101 starts operation as a normal MLO capable of performing simultaneous communication on the network corresponding to the link 103 and the network corresponding to the link 104.

Finally, control after starting operation in the EMLSR mode in the non-AP MLD 102 will be described with reference to Fig. 10.

In step S1000, the control unit 301 of the non-AP MLD 102 determines whether data to be transmitted to the AP MLD 101 has occurred. In a case where it is determined that data to be transmitted has occurred, the processing proceeds to step S1002. In a case where it is not determined that data to be transmitted has occurred, the processing proceeds to step S1006.

In step S1006, the control unit 301 cooperates with each unit and determines whether an initial control frame is received from the AP MLD 101. In a case where it is determined that the initial control frame is received from the AP MLD 101, the processing proceeds to step S1004, and in a case where it is not determined that the initial control frame is received, the processing proceeds to step S1005.

In step S1002, the control unit 301 determines whether to transition to a normal multi-link mode such as the STR mode and perform communication so as to execute data exchange.

In a case where it is determined that the non-AP MLD 102 is in a situation in which it is necessary to execute data exchange using a plurality of links, it is determined that it is necessary to transition to the normal multi-link mode and perform communication. More specifically, in a case where the control unit 301 determines that data requiring execution of data exchange with high throughput or low latency has occurred, it is determined that it is necessary to transition to the normal multi-link mode and perform communication. In a case where the control unit 301 determines that it is necessary to transition to the normal multi-link mode and perform communication, the processing proceeds to step S1003, and in a case where the control unit 301 does not determine that it is necessary to transition to the normal multi-link mode and perform communication, the processing proceeds to step S1004.

In step S1003, the control unit 301 cooperates with each unit and transmits the above-described EMLSR mode temporary release frame to the AP MLD 101. Then, it transitions to the normal multi-link mode such as the STR mode and executes data exchange with the AP MLD 101. Upon completion of data exchange, it performs mode negotiation with the AP MLD 101 again and re-transitions to the EMLSR mode. Alternatively, upon completion of data exchange, it automatically re-transitions to the EMLSR mode. When the re-transition is completed, the control unit 301 proceeds the processing to step S1005.

On the other hand, in step S1004, the control unit 301 cooperates with each unit and transmits an initial control frame to the AP MLD 101. In a case where the initial control frame is received from the AP MLD in step S1006, the processing of transmitting the initial control frame to the AP MLD 101 is omitted. Next, the control unit 301 cooperates with each unit and activates the one link via which the initial control frame has been transmitted or received so that normal data communication can be performed. Then, data exchange with the AP MLD 101 is executed via the activated link. That is, data exchange is executed via the EMLSR link activated for communication, while the EMLSR mode is maintained. In a case where the control unit 301 determines that the series of data exchange is completed, the processing proceeds to step S1005.

The control unit 301 transmits the EMLSR mode temporary release frame or the initial control frame via any of the EMLSR links. The control unit 301 can appropriately determine which EMLSR link to use for transmitting the frame in consideration of the channel usage status and the like.

As described above, the configuration may be such that, after transmitting the EMLSR mode temporary release frame or the initial control frame, a response frame thereto is received, and then actual data exchange is executed. At this time, in a case where the non-AP MLD 102 has not received the response frame from the AP MLD 101, the EMLSR mode temporary release frame or the initial control frame may be retransmitted without executing data exchange. Further, in a case where the EMLSR mode temporary release frame is transmitted and the response frame thereto is not received, control may be performed such that the AP MLD 101 is regarded as operating in the EMLSR mode. In this case, the non-AP MLD 102 may attempt to execute data exchange only via the EMLSR link via which the EMLSR mode temporary release frame has been transmitted.

Returning to the description of Fig. 10, in step S1005, the control unit 301 determines whether the EMLSR mode is to be ended. In a case where it is determined that the EMLSR mode is to be ended, the EMLSR mode is ended and the operation mode transitions to a normal multi-link mode such as the STR mode. On the other hand, in a case where it is determined that the EMLSR mode is not to be ended, the processing proceeds to step S1000. Specifically, the control unit 301 determines that the operation in the EMLSR mode is to be ended, for example, in a case where the amount of data communication with the AP MLD 101 is on an increasing trend, or in a case where it is inferred that the amount of data communication tends to increase based on past communication trends and the like. Further, in a case where the amount of data communication is not on an increasing trend or the like, the control unit 301 determines that the operation in the EMLSR mode is not to be ended, and then the processing proceeds to step S1000.

The above-described processing makes it possible to promptly respond to changes in the throughput or transmission delay amount required by the non-AP MLD while allowing the AP MLD to operate in a power saving manner.

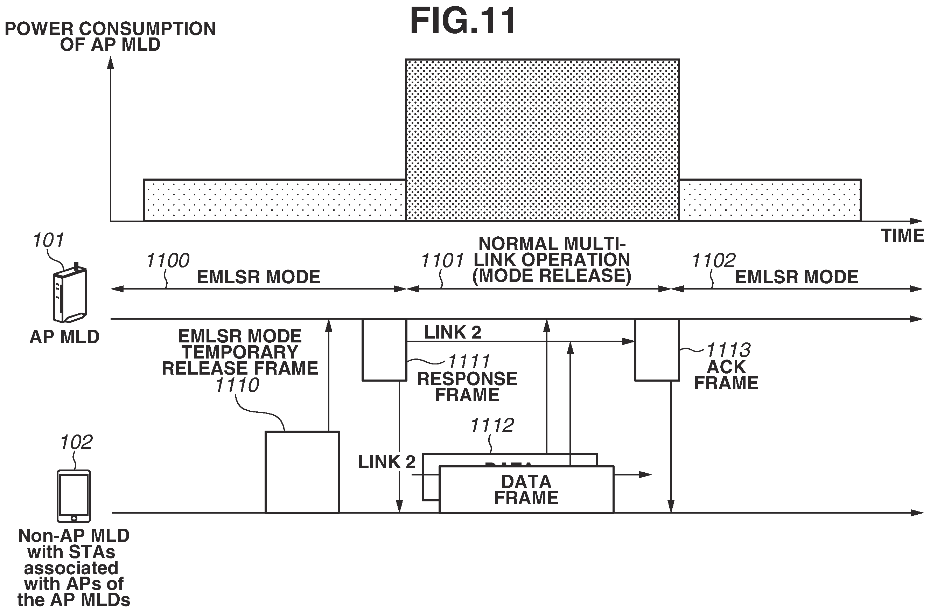

The effects of the present embodiment will be described with reference to Fig. 11. Fig. 11 is a schematic diagram illustrating a relationship between the EMLSR mode according to the present embodiment, a normal mode such as the STR mode, and power consumption.

The AP MLD 101 operates in the EMLSR mode during a period 1100, which is a period before transmitting a response frame 1111 to an EMLSR mode temporary release frame 1110.

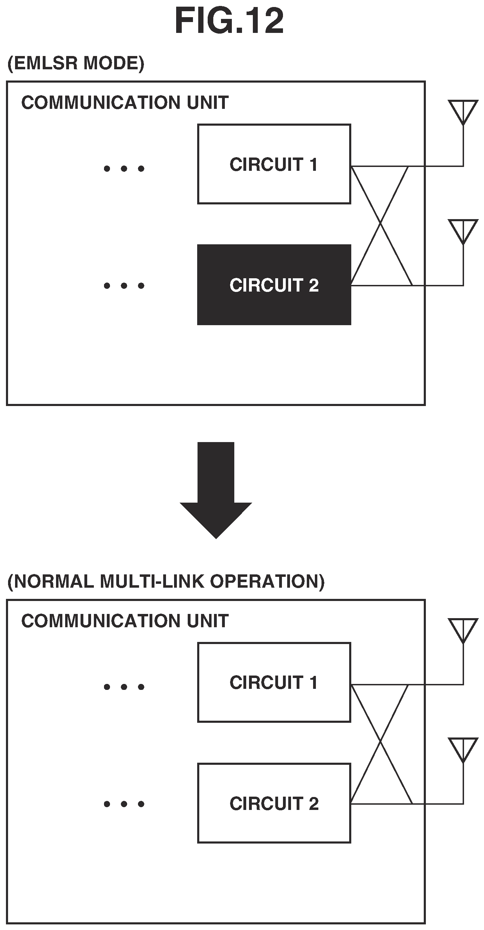

During the period in which the AP MLD 101 operates in the EMLSR mode, the AP MLD 101 waits to receive the EMLSR mode temporary release frame or the initial control frame via a plurality of EMLSR links. However, only one link can be used as the link via which the AP MLD 101 can actually receive and decode a data frame. Further, only one link can be used as the link via which a frame can be transmitted. During the period in which the AP MLD 101 operates in the EMLSR mode, the AP MLD 101 waits for reception of a frame via a plurality of EMLSR links. In this case, the control unit 301 cooperates with each unit and controls power to be supplied to each of a circuit for listening to a plurality of channels corresponding to the plurality of EMLSR links, and a circuit for transmitting and receiving frames with one link. In this case, the control unit 301 stops the supply of power and/or the supply of clock signals to the circuit that is required to exchange frames simultaneously via two links but does not cause any problem even when power supply is stopped in the EMLSR mode. For example, control is performed not to supply power and/or clock signals to a circuit 2 illustrated in Fig. 12. Therefore, the power consumption for maintaining the circuit, such as the circuit 2 illustrated in Fig. 12, which is required to exchange frames simultaneously via two links, but is not required to operate in the EMLSR mode, can be reduced. Consequently, the power consumption can be reduced compared to the period in which normal multi-link operation is performed.

Next, the non-AP MLD 102 transmits the EMLSR mode temporary release frame 1110 to the AP MLD 101 via one of the EMLSR links.

Upon receiving the EMLSR mode temporary release frame 1110 from the non-AP MLD 102, the AP MLD 101 transmits a response frame 1111 to the non-AP MLD 102 via one of the EMLSR links. Then, the EMLSR mode is released and normal multi-link operation is started. At this time, as illustrated in Fig. 12, power is supplied to the circuit that is required to exchange frames simultaneously via two links as shown in the normal multi-link operation and data exchange is actually executed, which leads to an increase in power consumption.

The AP MLD 101 exchanges data with the non-AP MLD 102 via a plurality of links, using a normal mode such as the STR mode or the NSTR mode during a period 1101.

In the data exchange procedure, the AP MDL 101 that has received a data frame 1112 transmits a response frame (in this case, ACK frame 1113) to the non-AP MLD 102. Upon completion of the series of data exchange, the AP MLD 101 re-transitions to the EMLSR mode (period 1102).

As described above with reference to Figs. 11 and 12, it becomes possible to promptly transition to a normal mode such as the STR mode or the NSTR mode from the EMLSR mode while introducing the EMLSR mode to the AP MLD 101. Consequently, while enabling power-saving operation in the AP MLD 101, it also becomes possible to promptly respond to changes in the throughput or transmission delay amount required by the non-AP MLD.

### <Modified Example 1>

The operations of steps S402 and S404 illustrated in Fig. 4 in the AP MLD 101, which have been described in the above-described embodiment, can be omitted. In this case, the AP MLD 101 starts operation in the EMLSR mode regardless of whether a frame including information indicating that activation of the EMLSR mode is permitted is received from the non-AP MLD 102. Further, in this case, the non-AP MLD 102 can omit the operations of steps S801, S803, and S805. In this case, the non-AP MLD 102 determines that the AP MLD 101 operates in the EMLSR mode based on the reception of a frame including information indicating that the EMLSR mode tends to be activated from the AP MLD 101. Then, in a case where the non-AP MLD 102 determines that the AP MLD 101 operates in the EMLSR mode, the processing of step S804 may be executed.

### <Modified Example 2>

In the above-described embodiment, a case has been exemplified in which the supply of power to the circuit that is required to exchange frames simultaneously via two links but does not cause any problem even when power supply is stopped in the EMLSR mode is stopped. However, the power control method is not limited to this, and can be configured to perform more aggressive power-saving control.

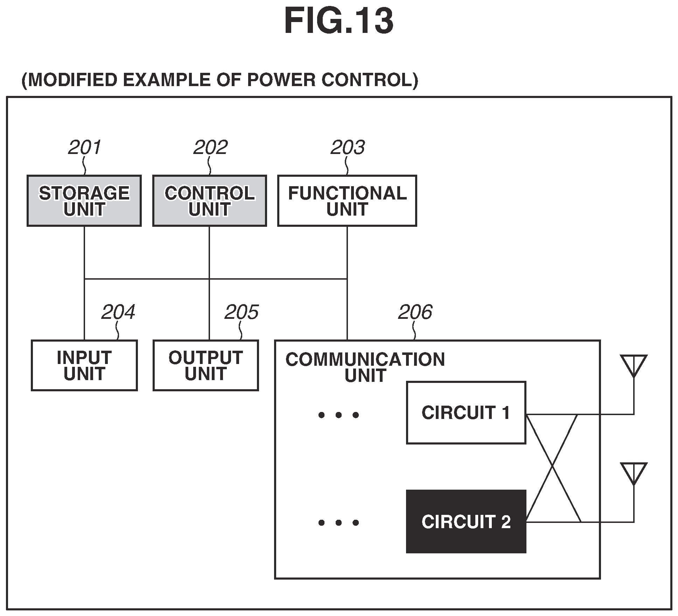

Here, a power state corresponding to the EMLSR mode is referred to as a first power state, and a power state corresponding to a normal mode is referred to as a second power state. To further suppress power consumption in the first power state at this time, a general-purpose hardware processor such as a CPU constituting the control unit 202 can be controlled to operate in the power saving mode. This will be specifically described with reference to Fig. 13.

In Modified Example 2, it is assumed that the control unit 202 is constituted by a general-purpose hardware processor, such as a CPU, and executes a control program to control the communication unit 206, such as the wireless chip, or the like. That is, the control unit 202 includes a general-purpose hardware processor that performs communication control in cooperation with a communication chip.

As the instruction set architecture of the general-purpose hardware processor, an x64 architecture, an Advanced RISC Machine (ARM) architecture, a Reduced Instruction Set Computer V (RISC-V) architecture, or the like can be adopted. The instruction set architecture may be an x86 architecture or a Microprocessor without Interlocked Pipeline Stages (MIPS) architecture.

In the case of causing the power state of the AP MLD 101 to transition to the first power state, the control unit 301 of the AP MLD 101 changes the operation mode of the general-purpose hardware processor so that the AP MLD 101 operates in a power saving state.

The change of the operation mode only needs to have an effect such as causing clock gating and/or power gating inside the general-purpose hardware processor. Further, the operation mode may also be changed so that a general-purpose memory such as a Dynamic Random Access Memory (DRAM) operates in a power saving state.

This effect will be described. The general-purpose hardware processor and the general-purpose memory that have hardware capability to process these pieces of data without problems are appropriately adopted at the time of designing the AP MLD 101 in consideration of the load of data processing in a normal mode such as the STR mode or the NSTR mode.

Accordingly, during the period 1100 and the period 1102 in which the processing load is assumed to be small compared to a normal mode, processing capability becomes excessive. In the present embodiment, the processing capability of the general-purpose hardware processor and the general-purpose memory can be intentionally reduced to lower power consumption during the period 1100 and the period 1102 in which the load is small, so that power saving can be further achieved. Consequently, the power consumption in the case of operation in the EMLSR mode can be reduced compared to the case of operation in a normal mode such as the STR or NSTR mode.

The first power state and the second power state can be configured to be switched for each state constituting the EMLSR mode. Specifically, the power state can be made different between a state of listening to an EMLSR link and a communication state in which communication is actually performed using the EMLSR link. For example, in this case, in the state of listening to packets in the EMLSR mode, the first power state in which the general-purpose hardware processor and the general-purpose memory also operate in a power saving state can be adopted. On the other hand, in the communication state in which data communication is actually performed using the EMLSR link, the second power state in which the general-purpose hardware processor and the general-purpose memory also operate in a normal mode can be adopted.

### <Modified Example 3>

In the above-described embodiment, a case has been described in which the non-AP MLD 102 is configured to start operation in the EMLSR mode in step S804. However, the non-AP MLD 102 may start only appropriate control so as to communicate with the AP MLD 101 that has started operation in the EMLSR mode is started, without starting operation in the EMLSR mode. That is, the non-AP MLD itself can be configured not to transition to the EMLSR mode.

In this case, each processing in Fig. 10 used to describe the details of step S804 may be modified as follows. First, the processing in Fig. 10 is started when the processing of step S804 in this modified example is started. In step S1006, the control unit 301 cooperates with each unit and determines whether not any frame, not limited to an initial control frame, has been received from the AP MLD 101. In this case, the AP MLD 101 operates in the EMLSR mode and transmits frames via only one link, so that the non-AP MLD 102 receives frames via only one link. In a case where the non-AP MLD 102 determines that any frame has been received from the AP MLD 101, the processing proceeds to step S1004, and in a case where it is not determined that any frame has been received, the processing proceeds to step S1000. Further, in step S1004, the control unit 301 cooperates with each unit and transmits an initial control frame to the AP MLD 101. In the case where any frame has been received from the AP MLD in step S1006, the process of transmitting an initial control frame to the AP MLD 101 is omitted. Subsequently, the control unit 301 cooperates with each unit and executes data exchange with the AP MLD 101 using one link via which the initial control frame has been transmitted, or using one link via which any frame has been received. That is, data exchange is executed while the state corresponding to the operation of the AP MLD 101 in the EMLSR mode is maintained. When the control unit 301 determines that the series of data exchange processing has been completed, the processing proceeds to step S1000. The non-AP MLD 102 according to this modified example, which does not start operation in the EMSLR mode, only needs to repeat the reception operation according to the modified example without making the determination in step S1005.

### (Other Embodiment 1)

Further, the disclosure of this embodiment includes the following configurations.

### (Configuration 1)

A communication device comprising:
a determination unit configured to determine whether a frame of a predetermined type has been received from a station device connected to an access point device configured to perform wireless communication based on the Institute of Electrical and Electronics Engineers (IEEE) 802.11 standards in a case where the access point device operates in an enhanced multi-link single radio (EMLSR) mode;
a communication control unit configured to release the EMLSR mode and perform data communication with the station device in a case where the determination unit determines that the frame of the predetermined type has been received; and
a transition unit configured to transition to the EMLSR mode after the data communication is performed by the communication control unit.

### (Configuration 2)

The communication device according to Configuration 1, wherein the frame of the predetermined type is a Request To Send (RTS) frame.

### (Configuration 3)

The communication device according to Configuration 1, wherein the frame of the predetermined type is a Null data PPDU (NDP) frame.

### (Configuration 4)

The communication device according to Configuration 1, wherein the frame of the predetermined type is an enhanced multi-link (EML) Operating Mode Notification frame.

### (Configuration 5)

A station device that performs wireless communication based on the Institute of Electrical and Electronics Engineers (IEEE) 802.11 standards, the station device comprising:
a communication control unit configured to transmit a frame of a predetermined type to an access point device connected to the station device, the access point device operating in an enhanced multi-link single radio (EMLSR) mode, and
the communication control unit configured to, after transmitting the frame of the predetermined type, perform data communication with the access point device that has released the EMLSR mode upon reception of the frame of the predetermined type as a trigger.

### (Configuration 6)

The station device according to Configuration 5, wherein the frame of the predetermined type is a Request To Send (RTS) frame.

### (Configuration 7)

The station device according to Configuration 5, wherein the frame of the predetermined type is a Null data PPDU (NDP) frame.

### (Configuration 8)

The station device according to Configuration 5, wherein the frame of the predetermined type is an enhanced multi-link (EML) Operating Mode Notification frame.

### (Configuration 9)

An access point device that performs wireless communication based on the Institute of Electrical and Electronics Engineers (IEEE) 802.11 standards, the access point device comprising:
a determination unit configured to determine whether a frame of a predetermined type has been received from a station device connected to the access point device in a case where the access point device is in a first power state and operates in an enhanced multi-link single radio (EMLSR) mode;
a communication control unit configured to transition to a second power state and perform data communication with the station device after the determination unit determines that the frame of the predetermined type has been received; and
a control unit configured to control a power state of a communication device to transition to the first power state from the second power state after the data communication has been performed by the communication control unit,
wherein the first power state is a power state with less power consumption than the second power state, and
wherein, in a case where the power state of the communication device is transitioned to the first power state, the control unit changes an operation mode of a general-purpose hardware processor, which performs communication control in cooperation with a communication chip, so that the general-purpose hardware processor operates in a power saving state.

### (Configuration 10)

The access point device according to Configuration 9, wherein an instruction set architecture of the general-purpose hardware processor is any one of an x64 architecture, an Advanced RISC Machine (ARM) architecture, and an Reduced Instruction Set Computer V (RISC-V) architecture.

### (Configuration 11)

The access point device according to Configuration 9 or 10, wherein a change of the operation mode causes clock gating and/or power gating inside the general-purpose hardware processor.

### (Configuration 12)

The access point device according to any one of Configurations 9 to 11, wherein the frame of the predetermined type is an initial control frame.

### (Configuration 13)

A control method for an access point device that performs wireless communication based on the Institute of Electrical and Electronics Engineers (IEEE) 802.11 standards, the control method comprising:
a determination step of determining whether a frame of a predetermined type has been received from a station device connected to the access point device in a case where the access point device operates in an enhanced multi-link single radio (EMLSR) mode;
a communication control step of releasing the EMLSR mode and performing data communication with the station device in a case where it is determined by the determination step that the frame of the predetermined type has been received; and
a transition step of transitioning to the EMLSR mode after the data communication has been performed in the communication control step.

### (Configuration 14)

A control method for a station device that performs wireless communication based on the Institute of Electrical and Electronics Engineers (IEEE) 802.11 standards, the control method comprising:
a transmission control step of transmitting a frame of a predetermined type to an access point device connected to the station device, the access point device operating in an enhanced multi-link single radio (EMLSR) mode; and
a communication control unit configured to, after transmitting the frame of the predetermined type, perform data communication with the access point device that has released the EMLSR mode upon reception of the frame of the predetermined type.

### (Configuration 15)

A program for causing a computer to execute the control method according to Configuration 13 or 14.

The invention is not limited to the above embodiments, and various changes and modifications can be made without departing from the spirit and scope of the invention. Therefore, claims are appended to publicly disclose the scope of the invention.

According to one aspect of the above-described embodiments or modified examples, it is possible to promptly respond to changes in the throughput or transmission delay amount required by the non-AP MLD while allowing the AP MLD to operate in a power saving state. According to another aspect of the present invention, the AP MLD can perform a power saving operation.

This application claims the benefit of Japanese Patent Application No. 2023-131393, filed August 10, 2023, which is hereby incorporated by reference herein in its entirety.

### Reference Signs List

- 101: AP MLD
- 102: non-AP MLD
- 206: Communication unit

## Claims

1. A communication device comprising:
a determination unit configured to determine whether a frame of a predetermined type has been received from a station device connected to an access point device configured to perform wireless communication based on the Institute of Electrical and Electronics Engineers (IEEE) 802.11 standards in a case where the access point device operates in an enhanced multi-link single radio (EMLSR) mode;
a communication control unit configured to release the EMLSR mode and perform data communication with the station device in a case where the determination unit determines that the frame of the predetermined type has been received; and
a transition unit configured to transition to the EMLSR mode after the data communication is performed by the communication control unit.

2. The communication device according to Claim 1, wherein the frame of the predetermined type is a Request To Send (RTS) frame.

3. The communication device according to Claim 1, wherein the frame of the predetermined type is a Null data PPDU (NDP) frame.

4. The communication device according to Claim 1, wherein the frame of the predetermined type is an enhanced multi-link (EML) Operating Mode Notification frame.

5. A station device that performs wireless communication based on the Institute of Electrical and Electronics Engineers (IEEE) 802.11 standards, the station device comprising:
a communication control unit configured to transmit a frame of a predetermined type to an access point device connected to the station device, the access point device operating in an enhanced multi-link single radio (EMLSR) mode, and
the communication control unit configured to, after transmitting the frame of the predetermined type, perform data communication with the access point device that has released the EMLSR mode upon reception of the frame of the predetermined type as a trigger.

6. The station device according to Claim 5, wherein the frame of the predetermined type is a Request To Send (RTS) frame.

7. The station device according to Claim 5, wherein the frame of the predetermined type is a Null data PPDU (NDP) frame.

8. The station device according to Claim 5, wherein the frame of the predetermined type is an enhanced multi-link (EML) Operating Mode Notification frame.

9. An access point device that performs wireless communication based on the Institute of Electrical and Electronics Engineers (IEEE) 802.11 standards, the access point device comprising:
a determination unit configured to determine whether a frame of a predetermined type has been received from a station device connected to the access point device in a case where the access point device is in a first power state and operates in an enhanced multi-link single radio (EMLSR) mode;
a communication control unit configured to transition to a second power state and perform data communication with the station device after the determination unit determines that the frame of the predetermined type has been received; and
a control unit configured to control a power state of a communication device to transition to the first power state from the second power state after the data communication has been performed by the communication control unit,
wherein the first power state is a power state with less power consumption than the second power state, and
wherein, in a case where the power state of the communication device is transitioned to the first power state, the control unit changes an operation mode of a general-purpose hardware processor, which performs communication control in cooperation with a communication chip, so that the general-purpose hardware processor operates in a power saving state.

10. The access point device according to Claim 9, wherein an instruction set architecture of the general-purpose hardware processor is any one of an x64 architecture, an Advanced RISC Machine (ARM) architecture, and an Reduced Instruction Set Computer V (RISC-V) architecture.

11. The access point device according to Claim 10, wherein a change of the operation mode causes clock gating and/or power gating inside the general-purpose hardware processor.

12. The access point device according to any one of Claims 9 to 11, wherein the frame of the predetermined type is an initial control frame.

13. A control method for an access point device that performs wireless communication based on the Institute of Electrical and Electronics Engineers (IEEE) 802.11 standards, the control method comprising:
a determination step of determining whether a frame of a predetermined type has been received from a station device connected to the access point device in a case where the access point device operates in an enhanced multi-link single radio (EMLSR) mode;
a communication control step of releasing the EMLSR mode and performing data communication with the station device in a case where it is determined by the determination step that the frame of the predetermined type has been received; and
a transition step of transitioning to the EMLSR mode after the data communication has been performed in the communication control step.

14. A control method for a station device that performs wireless communication based on the Institute of Electrical and Electronics Engineers (IEEE) 802.11 standards, the control method comprising:
a transmission control step of transmitting a frame of a predetermined type to an access point device connected to the station device, the access point device operating in an enhanced multi-link single radio (EMLSR) mode; and
a communication control unit configured to, after transmitting the frame of the predetermined type, perform data communication with the access point device that has released the EMLSR mode upon reception of the frame of the predetermined type.

15. A program for causing a computer to execute the control method according to Claim 13 or 14.
